(19)

Europäisches
Patentamt

European
Patent Office

Office européen
des brevets

(11)     **EP 3 012 608 B1**

(12)                                   **EUROPEAN PATENT SPECIFICATION**

(45) Date of publication and mention
of the grant of the patent:
**18.12.2019  Bulletin 2019/51**

(51) Int Cl.:
***G01L 5/10*** *(2006.01)*

(21) Application number: **15187693.5**

(22) Date of filing: **30.09.2015**

(54) **YARN TENSION SENSOR FOR TEXTILE APPARATUS**

GARNSPANNUNGSSENSOR FÜR TEXTILMASCHINEN

CAPTEUR DE TENSION DE FIL POUR DES APPAREILS TEXTILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2014  IT TO20140868**

(43) Date of publication of application:
**27.04.2016  Bulletin 2016/17**

(73) Proprietor: **L.G.L. Electronics S.p.A.**
**24024 Gandino (Bergamo) (IT)**

(72) Inventors:
• **BERTOCCHI, Giorgio**
**24026 LEFFE  BG (IT)**

• **GOTTI, Luca**
**24021 ALBINO  BG (IT)**
• **ZENONI, Pietro**
**24026 LEFFE BG (IT)**

(74) Representative: **Modiano, Micaela Nadia et al**
**Modiano & Partners**
**Via Meravigli, 16**
**20123 Milano (IT)**

(56) References cited:
**EP-A1- 0 459 322     US-A- 4 378 704
US-A- 4 759 226**

EP 3 012 608 B1

**Description**

The present invention relates to a yarn tension sensor for textile apparatus.

In weaving processes it is known to monitor and control the tension of the yarn fed to a textile machine, e.g., a loom or a knitting machine, in order to keep it substantially constant at a preset optimal value. Such contrivance makes it possible to improve the quality of the product and to minimize the risk of accidental jams or stoppages during the process.

The yarn tension sensors used conventionally for this purpose can be based either on resistive strain gauges connected by a Wheatstone bridge, or on the Hall effect.

Tension sensors using resistive strain gauges are considerably complex to build, which makes them relatively expensive and also delicate.

Tension sensors using the Hall effect are notoriously affected by thermal drift, which makes it necessary to periodically reset the tension sensor with consequent complications in the weaving process.

Therefore, the aim of the present invention is to provide a yarn tension sensor that takes measurements of extremely high precision while overcoming the above-mentioned drawbacks of conventional sensors, with a simpler and stronger structure than sensors using resistive strain gauges, and without being affected by the thermal drift problems of Hall effect sensors.

The above aim and other advantages, which will become more apparent from the description that follows, are achieved by the yarn tension sensor having the characteristics recited in the appended claim 1, while the appended dependent claims define other
Document EP-459322 discloses an instrument to measure the yarn tension by means of variations of self-inductance.

Now the invention will be described in more detail, with reference to some preferred, but not exclusive, embodiments thereof, which are illustrated for the purposes of non-limiting example in the accompanying drawings, wherein:

Figure 1 is a perspective view of a yarn tension sensor according to the invention;
Figure 2 is a side elevation view of the yarn tension sensor in Figure 1;
Figure 3 is a side elevation view showing only a first component of the yarn tension sensor in Figure 1;
Figure 4 is a schematic view of the principle of operation of the component in Figure 3;
Figure 5 is a perspective view of a second component of the yarn tension sensor in Figure 1;
Figure 6 is a perspective view of the component in Figure 3, shown upside-down;
Figure 7 is a circuit diagram showing the principle of operation of the yarn tension sensor according to the invention;

Figure 8 is a perspective view of a yarn tension sensor in a first alternative embodiment of the invention;
Figure 9 is a side elevation view of the yarn tension sensor in Figure 8;
Figure 10 is a side elevation view of a yarn tension sensor in a second alternative embodiment of the invention;
Figure 11 is a perspective view of a yarn tension sensor in a third alternative embodiment of the invention;
Figure 12 is an axial cross-sectional view of the yarn tension sensor in Figure 11;
Figure 13 is a partially sectional perspective view of a yarn tension sensor in a fourth alternative embodiment of the invention;
Figure 14 is an axial cross-sectional view of the yarn tension sensor in Figure 13.

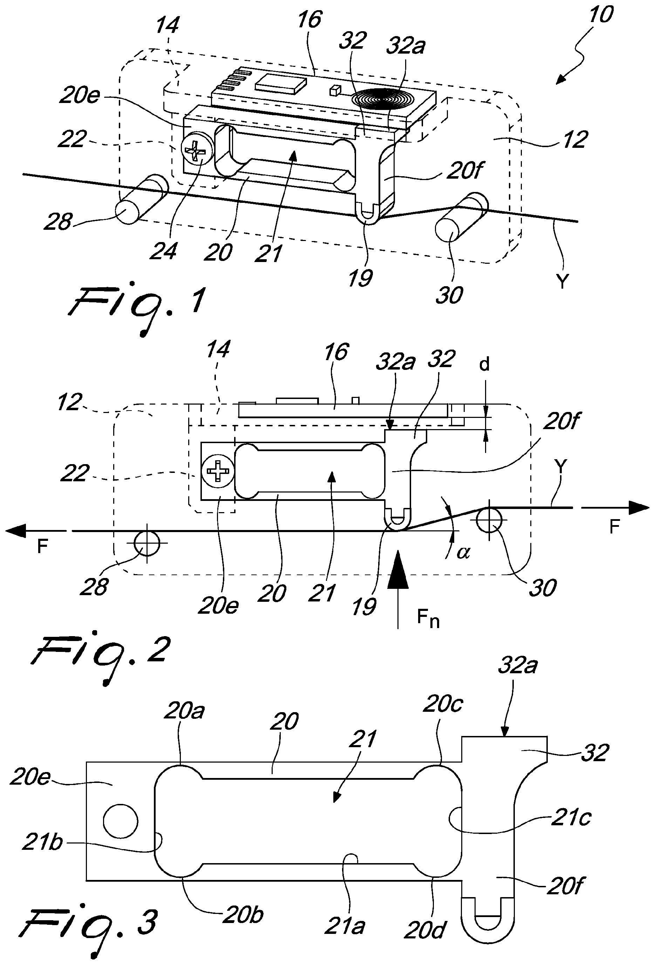

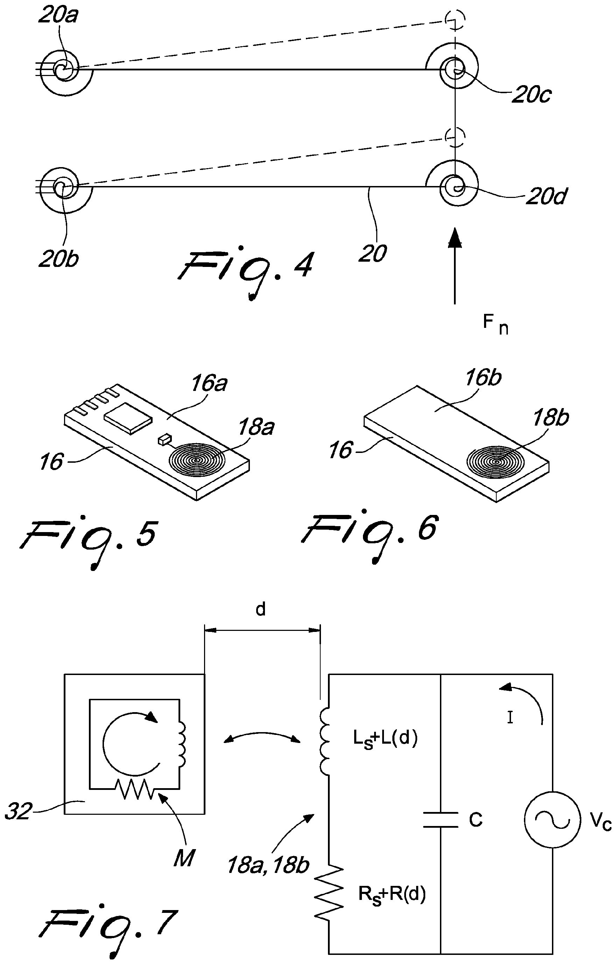

With reference to Figures 1-7, a sensor 10 adapted to measure the tension of a yarn Y in a textile apparatus comprises a plate-like carrier 12 which has a substantially rectangular profile. In Figures 1 and 2 the carrier 12 is shown transparent with dotted lines for greater clarity. An integral ledge 14 protrudes at right angles from one of the two long sides of the carrier 12. The ledge 14 supports a circuit board 16 which is provided with two spiral coils 18a, 18b on two respective opposite sides 16a, 16b thereof (Figures 5 and 6).

A contact element constituted by a thread-guide ferrule 19 shaped like an upside-down U, adapted to be slideably engaged by the yarn Y, is sustained moveably with respect to the carrier 12 by support means which, in this embodiment, are constituted by a flexible arm 20 which extends parallel to the surface of the carrier 12 and to the surface of the ledge 14. As illustrated in detail in Figure 3, the flexible arm 20 is provided with a longitudinal slot 21 shaped like a bone, with a rectilinear middle portion 12a and two enlargements 21b, 21c at its opposite ends, which locally reduce the thickness of the material of the flexible arm 20 in four points 20a, 20b, 20c and 20d at the corners of a rectangle; in this manner, the flexible arm 20 is kinematically comparable to an articulated quadrilateral with elastic hinges as shown schematically in Figure 4. Advantageously, the flexible arm 20 is made of a single piece of metallic material, preferably aluminum alloy, and the minimum thickness of the material at the four points 20a, 20b, 20c and 20d is about equal to 1/10 of the thickness in the area outlined by the rectilinear middle portion 21a of the longitudinal slot 21.

The flexible arm 20 has a first, or fixed, end 20e, which is integral with a projecting ridge 22 of the carrier 12 by way of a screw 24. The thread-guide ferrule 19 is fixed to the opposite, or moveable, end 20f, of the flexible arm 20 on the opposite side from the ledge 14. The moveable end 20f is free to oscillate parallel to the surface of the carrier 12, toward/away from the ledge 14, in accordance with the fluctuations of tension of the yarn Y. In particular, the thread-guide ferrule 19 is arranged so as to interfere with the path imposed on the yarn Y by a pair of thread-guide pins 28, 30 which are fixed at right angles to the carrier 12 respectively upstream and downstream of the ferrule 19. On the opposite side from the thread-guide ferrule 19, the moveable end 20f of the flexible arm 20 is shaped like a platform 32 with a flat surface 32a which faces and is parallel to the lower face 16b of the circuit board 16, in front of the lower spiral coil 18b.

With reference to Figure 7, which schematically illustrates the principle of operation of the yarn tension sensor according to the invention, in a way that is known per se, the circuit board 16 is provided with a control unit which is programmed to modulate the voltage $V_C$ applied to the ends of the circuit so as to keep the strength of the current I that passes through the spiral coils 18a, 18b substantially constant at a preset value, by way of closed loop feedback. In Figure 7, the spiral coils 18a, 18b are shown schematically as comprised of a resistance $R_S$ and an inductance $L_S$ which are arranged in series, and which are connected in parallel to a condenser C in order to bring the circuit into resonance. As a consequence, the spiral coils 18a, 18b generate a controlled primary magnetic field with a strength proportional to the current that passes through them. As is known, such magnetic field produces eddy currents on the platform 32, the strength of which is proportional to the distance from the source that produced them, i.e., the spiral coils 18a, 18b. The eddy currents in turn generate an induced magnetic field of proportional strength. In Figure 7, the induced magnetic field is shown as produced by a closed circuit M made up of a resistance and an inductance which are arranged in series. The induced magnetic field produces a variation of inductance L(d) and a variation of resistance R(d) on the spiral coils 18a, 18b according to the known Lenz's law. Both of the above variations are a function of the distance d between the platform 32 and the spiral coils 18a, 18b (Figure 7). Still in a way that is known per se, the circuit board 16 is programmed to return as output both the oscillation frequency f of the resonant circuit, which is linked to the total inductance L, equal to the sum of the inductance $L_s$ and of the variation of inductance L(d), from the formula

$$L = 1/[C(2\pi f)^2]$$

and also the equivalent parallel impedance $R_p$ of the resonant circuit, given by the formula

$$R_p = P/I^2$$

where P is the power measured.

The first of the two measurements is substantially impervious to variations of temperature (of the order of 15 ppm/°C), while the second measurement is highly influenced by the variations of temperature (of the order of 3900 ppm/°C).

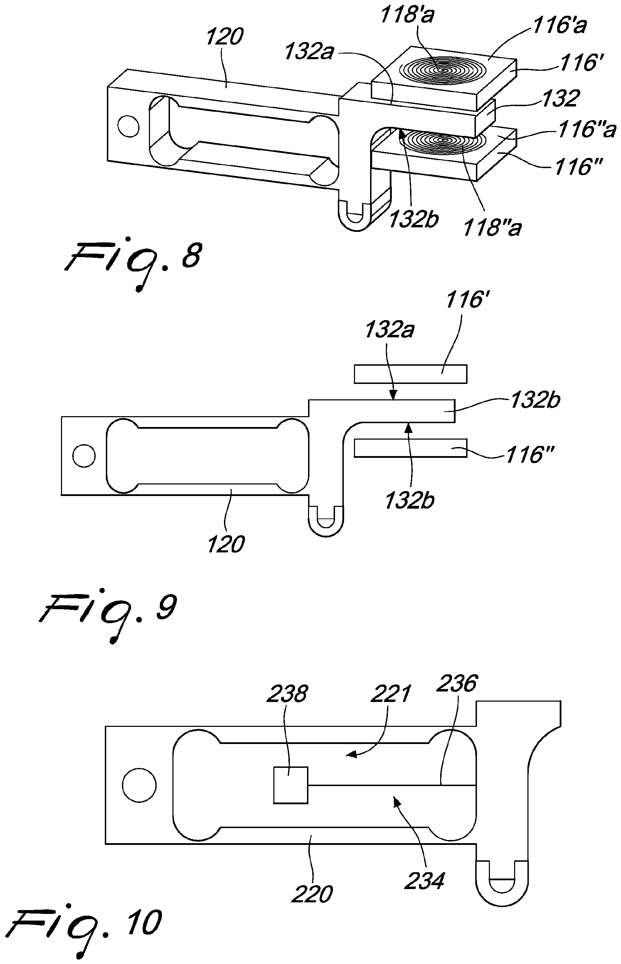

Figures 8 and 9 show an alternative embodiment of the invention, which makes it possible to neutralize the effect of the variations of temperature on measuring.

In this embodiment, the platform 132 of the flexible arm 120 has an elongated profile with two mutually opposite flat sides 132a, 132b. The platform 132 is inserted between two circuit boards 116', 116" both of which are provided with two spiral coils on two respective opposite sides (in Figure 8 only the spiral coils 118'a, 118"a on the upper sides 116'a, 116"a are visible). The control unit is programmed to calculate the position of the platform 132 as a function of the ratio between the equivalent parallel impedances measured by the two circuit boards 116' and 116", so as to cancel out the influence of the temperature on measuring.

Figure 10 schematically illustrates a second alternative embodiment of the invention, in which the flexible arm 220 is provided with a dynamic damper 234 which is adapted to limit the vibrations of the flexible arm 220 which are caused by the variations of tension of the yarn, as a consequence increasing the precision of measurement. The dynamic damper 234 is made up of an elastic foil 236 which protrudes from the free end of the flexible arm 220 toward the inside of the longitudinal slot 221 and parallel to the latter, and carries a mass 238 anchored to its free end. The elastic foil 236 and the mass 238 are calculated so that the natural frequency of the dynamic damper 234 is proximate to the natural frequency of the flexible arm 220, so that the dynamic damper 234 moves counterphase with respect to the flexible arm 220, so as to absorb the kinetic energy of the latter. Such damping system offers corresponding simplicity of construction and high reliability in non-ideal environmental conditions, e.g., in the presence of dirt and damp.

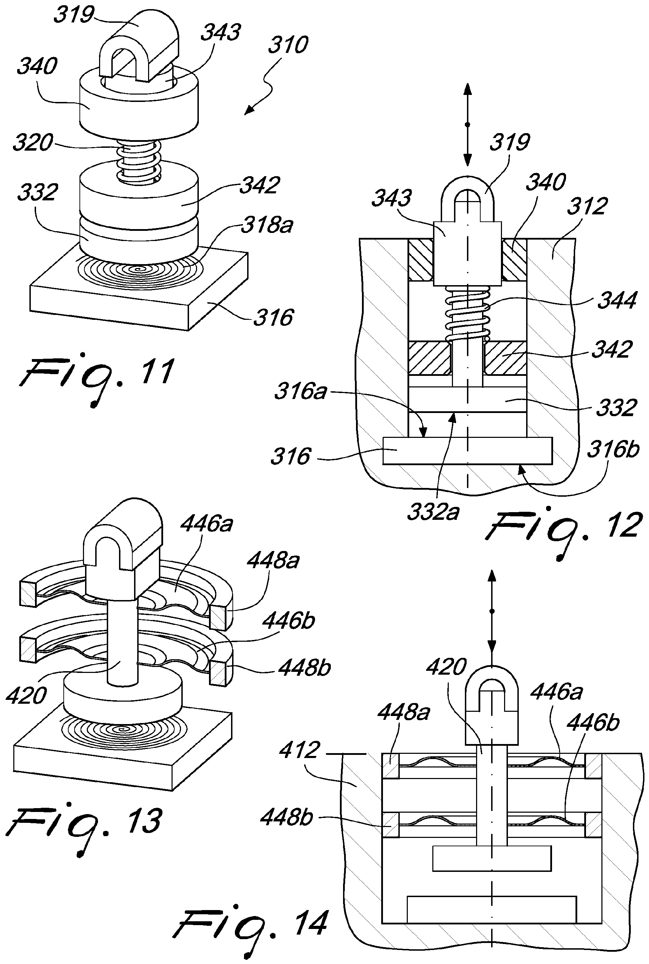

Figures 11 and 12 show a third alternative embodiment of the invention.

In this embodiment, the tension sensor 310 comprises a carrier 312 (shown only in Figure 12 for greater clarity) which sustains slideably a rod 320 by way of a pair of bushings 340, 342. The rod 320 has a cap 343 at one of its ends, on which is mounted a thread-guide ferrule 319 shaped like an upside-down U, and a pan 332 made of conductive material at its opposite end. The cap 343 is slideably surrounded by a first one of the two bushings, 340. The pan 332 has a flat face 332a which faces a circuit board 316 which is integral with the carrier 312, and is provided with two spiral coils on its respective two opposite sides 316a, 316b (in Figure 11 only the spiral coil 318a on the upper face 316a is visible). The pan 332 is pushed elastically away from the circuit board 316 by a compression spring 344 which is operatively interposed between the cap 343 and the second one of the two bushings, 342.

In this embodiment, the thread-guide ferrule 319 is adapted to be engaged slideably by the yarn (not shown) in a manner similar to the previous embodiments, with the distance between the pan 332 and the circuit board 316 decreasing as the tension of the yarn increases.

Figures 13 and 14 show a fourth alternative embodiment of the invention.

Such fourth embodiment differs from the previous one in that the rod 420, instead of being supported slideably by a pair of bushings and stressed by a spring, is supported by two elastic, coaxial annular diaphragms 446a, 446b, the inner edges of which are fixed to the rod 420 and the outer edges of which are fixed to the carrier 412 by way of respective fixing rings 448a, 448b. The annular diaphragms 446a, 446b have an undulating profile in order to facilitate their axial deformation. With respect to the previous embodiment, this embodiment has the advantage of eliminating the friction in the axial movements of the rod 420, to the benefit of the precision of measurement.

Some preferred embodiments of the invention have been described, but obviously the person skilled in the art may make various modifications and variations within the scope of protection of the claims. For example, although in all the embodiments described the circuit board has two coaxial spiral coils on its respective opposite sides, it is also possible to make the sensor with a single spiral coil or, on the contrary, multiply the number of spiral coils in order to increase the reliability of measurement. Furthermore, the thread-guide ferrule, like the thread-guide pins, can be substituted by other contact elements of different shape, e.g., thread-guide bushings and the like.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A yarn tension sensor, comprising a support (12) and a contact element (19) which is adapted to be slideably engaged by a yarn (Y) and is movably sustained with respect to the support (12) in relation to the fluctuations of tension of said yarn (Y), said contact element (19) being integral with a reference element (32) which is made of a conductive material, said reference element (32) operatively facing at least one spiral coil (18a, 18b) driven by a control unit (16) in order to generate a primary magnetic field of constant strength which produces eddy currents on said reference element (32) which have a strength proportional to the distance from said spiral coil (18a, 18b), which eddy currents generate an induced magnetic field of proportional strength which causes the inductance and the resistance of said spiral coil (18a, 18b) to vary as a function of the distance of said spiral coil (18a, 18b) from said reference element (32), **characterized in that** said control unit (16) is programmed to calculate the tension of the yarn from the variations of said inductance (L(d)) and said resistance (R(d)), on the basis of either the resulting oscillation frequency (f) or the resulting parallel impedance ($R_p$) of the resonant circuit.

2. The yarn tension sensor according to claim 1, **characterized in that** said contact element (19) is integral with support means (20) which are movable in a substantially rectilinear direction at right angles to said at least one spiral coil (18a, 18b), and **in that** said reference element (32) has a flat surface (32a) facing and parallel to said at least one spiral coil (18a, 18b).

3. The yarn tension sensor according to claim 2, **characterized in that** said support means (20) comprise a flexible arm (20) which is kinematically configured as an articulated quadrilateral with elastic hinges, and has a first end (20e) which is integral with said support (12) and an opposite, second end (20f) which is free to oscillate along said rectilinear direction and has said contact element (19) and said reference element (32) integral therewith.

4. The yarn tension sensor according to claim 3, **characterized in that** said flexible arm (20) is provided in a single piece and has a longitudinal slot (21) which is provided with a substantially rectilinear middle portion (21a) and with enlargements (21b, 21c) at both its opposite ends, which locally reduce the thickness of the material of said flexible arm (20) at four elastically yielding points (20a, 20b, 20c e 20d) at the corners of a rectangle, so as to provide said articulated quadrilateral.

5. The yarn tension sensor according to claim 4, **characterized in that** said flexible arm (20) is made of an aluminum alloy and the minimum thickness of the material at said four points (20a, 20b, 20c e 20d) is substantially equal to 1/10 of the thickness at said substantially rectilinear middle portion (21a).

6. The yarn tension sensor according to one or more of claims 1 to 5, **characterized in that** it comprises a first spiral coil (18a) and a second spiral coil (18b) which are arranged on respective opposite sides of a circuit board (16).

7. The yarn tension sensor according to claim 2, **characterized in that** said reference element (132) has a second flat surface (132b) opposite the first one and facing and parallel to a respective spiral coil, said control unit being programmed to calculate the position of said reference element (132) as a function of the ratio between the equivalent parallel impedances measured on the two spiral coils, thereby neutralizing the influence of the temperature on the measurement.

8. The yarn tension sensor according to one or more of claims 3 to 7, **characterized in that** said flexible arm (220) is provided with a dynamic damper (234), which is comprised of an elastic foil (236) having one end integral with the free end of the flexible arm (220) and the opposite, free end anchored to a mass (238), said dynamic damper having a natural frequency proximate to the natural frequency of said flexible arm (220) in order to limit the vibrations thereof.

9. The yarn tension sensor according to claim 2, **characterized in that** said support means comprise a rod (320) which is axially slideable with respect to said support (312) and is provided with said contact element (319) at one of its ends and said reference element (332) at its opposite end, said rod (320) being biased away from said at least one spiral coil by elastic means (344).

10. The yarn tension sensor according to claim 9, **characterized in that** said elastic means comprise a compression spring (344) which is operatively interposed between said contact element (319) and said support (312).

11. The yarn tension sensor according to claim 9, **characterized in that** said elastic means comprise a pair of elastic, coaxial annular diaphragms (446a, 446b) which have their inner edges integral with said rod (420) and their outer edges integral with said support (412).

**Patentansprüche**

1. Ein Garnspannungssensor, der einen Träger (12) und ein Kontaktelement (19) umfasst, das ausgebildet ist, um verschiebbar in Eingriff mit einem Garn (Y) zu stehen, und mit Bezug auf den Träger (12) beweglich gehalten wird im Hinblick auf die Spannungsfluktuationen des Garns (Y); wobei das Kontaktelement (19) integral mit einem Bezugselement (32) ist, das aus einem leitenden Material besteht, wobei das Bezugselement (32) operativ mindestens einer Spiralspule (18a, 18b) zugewandt ist, die von einer Steuereinheit (16) angetrieben wird, um ein primäres Magnetfeld mit konstanter Stärke zu erzeugen, das Wirbelströme an dem Bezugselement (32) erzeugt, die eine Stärke proportional zu dem Abstand von der Spiralspule (18a, 18b) haben; wobei die Wirbelströme ein induziertes Magnetfeld mit proportionaler Stärke erzeugen, welches veranlasst, dass die Induktivität und der Widerstand der Spiralspule (18a, 18b) in Abhängigkeit von dem Abstand der Spiralspule (18a, 18b) von dem Bezugselement (32) variieren; **dadurch gekennzeichnet, dass** die Steuereinheit (16) programmiert ist, um die Spannung des Garns aus den Schwankungen der Induktivität (L(d)) und des Widerstandes (R(d)), auf der Grundlage entweder der resultierenden Schwingungsfrequenz (f) oder der resultierenden Parallelimpedanz ($R_p$) des Resonanzkreises, zu berechnen.

2. Der Garnspannungssensor gemäß Anspruch 1, **dadurch gekennzeichnet, dass** das Kontaktelement (19) integral mit tragenden Mitteln (20) ist, die in einer im Wesentlichen geradlinigen Richtung in rechten Winkeln zu der mindestens einen Spiralspule (18a, 18b) beweglich sind, und dadurch, dass das Bezugselement (32) eine flache Oberfläche (32a) hat, die der mindestens einen Spiralspule (18a, 18b) zugewandt und dazu parallel ist.

3. Der Garnspannungssensor gemäß Anspruch 2, **dadurch gekennzeichnet, dass** die tragenden Mittel (20) einen biegsamen Arm (20) umfassen, der kinematisch als gelenkiges Viereck mit elastischen Scharnieren ausgebildet ist und ein erstes Ende (20e) hat, das integral mit dem Träger (12) ist, und ein gegenüberliegendes zweites Ende (20f), das frei ist, um in der geradlinigen Richtung zu schwingen, und mit dem das Kontaktelement (19) und das Bezugselement (32) integral sind.

4. Der Garnspannungssensor gemäß Anspruch 3, **dadurch gekennzeichnet, dass** der biegsame Arm (20) einteilig ausgebildet ist und einen Längsschlitz (21) hat, welcher mit einem im Wesentlichen geradlinigen mittleren Abschnitt (21a) und mit Erweiterungen (21b, 21c) an seinen beiden gegenüberliegenden Enden versehen ist, welche die Dicke des Materials des biegsamen Arms (20) an vier elastisch nachgebenden Punkten (20a, 20b, 20c und 20d) an den Ecken eines Rechtecks lokal vermindern, um das gelenkige Viereck zu bilden.

5. Der Garnspannungssensor gemäß Anspruch 4, **dadurch gekennzeichnet, dass** der biegsame Arm (20) aus einer Aluminiumlegierung besteht und die minimale Dicke des Materials an den vier Punkten (20a, 20b, 20c und 20d) im Wesentlichen gleich 1/10 der Dicke an dem im Wesentlichen geradlinigen mittleren Abschnitt (21a) ist.

6. Der Garnspannungssensor gemäß einem oder mehreren der Ansprüche 1 bis 5, **dadurch gekennzeichnet, dass** er eine erste Spiralspule (18a) und eine zweite Spiralspule (18b) umfasst, die an entsprechenden gegenüberliegenden Seiten einer Leiterplatte (16) angeordnet sind.

**7.** Der Garnspannungssensor gemäß Anspruch 2, **dadurch gekennzeichnet, dass** das Bezugselement (132) eine zweite flache Oberfläche (132b) gegenüber der ersten hat, die parallel zu einer entsprechenden Spiralspule ist, wobei die Steuereinheit programmiert ist, um die Position des Bezugselements (132) in Abhängigkeit von dem Verhältnis der bei den zwei Spiralspulen gemessenen äquivalenten Parallelimpedanz zu berechnen, wodurch der Einfluss der Temperatur auf die Messung neutralisiert wird.

**8.** Der Garnspannungssensor gemäß einem oder mehreren der Ansprüche 3 bis 7, **dadurch gekennzeichnet, dass** der biegsame Arm (220) mit einem dynamischen Dämpfer (234) ausgestattet ist, der aus einer elastischen Folie (236) besteht, deren eines Ende integral mit dem freien Ende des biegsamen Arms (220) ist und deren gegenüberliegendes, freies Ende an einer Masse (238) verankert ist, wobei der dynamische Dämpfer eine natürliche Frequenz hat, die nahe der natürlichen Frequenz des biegsamen Arms (220) ist, um die Schwingungen desselben zu begrenzen.

**9.** Der Garnspannungssensor gemäß Anspruch 2, **dadurch gekennzeichnet, dass** die tragenden Mittel einen Schaft (320) umfassen, der axial mit Bezug auf den Träger (312) verschiebbar und an einem seiner Enden mit dem Kontaktelement (319) und an seinem gegenüberliegenden Ende mit dem Bezugselement (332) ausgestattet ist, wobei der Schaft (320) durch elastische Mittel (344) von der mindestens einen Spiralspule fort vorgespannt ist.

**10.** Der Garnspannungssensor gemäß Anspruch 9, **dadurch gekennzeichnet, dass** die elastischen Mittel eine Druckfeder (344) umfassen, die operativ zwischen dem Kontaktelement (319) und dem Träger (312) angeordnet ist.

**11.** Der Garnspannungssensor gemäß Anspruch 9, **dadurch gekennzeichnet, dass** die elastischen Mittel ein Paar elastischer, koaxialer Ringmembranen (446a, 446b) umfassen, deren Innenkanten integral mit dem Schaft (420) sind und deren Außenkanten integral mit dem Träger (412) sind.

**Revendications**

**1.** Capteur de tension de fil, comportant un support (12) et un élément de contact (19) qui est adapté pour venir en contact de manière glissante avec un fil (Y) et est soutenu de manière mobile par rapport au support (12) en relation avec les fluctuations de tension dudit fil (Y), ledit élément de contact (19) étant solidaire d'un élément de référence (32) qui est constitué d'un matériau conducteur, ledit élément de référence (32) étant dirigé de manière opérationnelle vers au moins une bobine en spirale (18a, 18b) pilotée par une unité de commande (16) afin de générer un champ magnétique primaire d'intensité constante qui produit des courants de Foucault sur ledit élément de référence (32) qui ont une intensité proportionnelle à la distance par rapport à ladite bobine en spirale (18a, 18b), lesquels courants de Foucault génèrent un champ magnétique induit d'intensité proportionnelle qui amène l'inductance et la résistance de ladite bobine en spirale (18a, 18b) à varier en fonction de la distance de ladite bobine en spirale (18a, 18b) par rapport audit élément de référence (32), caractérisé ce que ladite unité de commande (16) est programmée pour calculer la tension du fil à partir des variations de ladite inductance (L(d)) et de ladite résistance (R(d)), sur la base soit de la fréquence d'oscillation (f) résultante soit de l'impédance parallèle ($R_p$) résultante du circuit résonant.

**2.** Capteur de tension de fil selon la revendication 1, **caractérisé en ce que** ledit élément de contact (19) est solidaire de moyens de support (20) qui sont mobiles dans une direction sensiblement rectiligne à angles droits par rapport à ladite au moins une bobine en spirale (18a, 18b), et **en ce que** ledit élément de référence (32) a une surface plane (32a) dirigée vers ladite au moins une bobine en spirale (18a, 18b) et parallèle à celle-ci.

**3.** Capteur de tension de fil selon la revendication 2, **caractérisé en ce que** lesdits moyens de support (20) comportent un bras souple (20) qui est cinématiquement configuré comme un quadrilatère articulé avec des charnières élastiques, et a une première extrémité (20e) qui est solidaire dudit support (12) et une seconde extrémité opposée (20f) qui est libre d'osciller le long de ladite direction rectiligne et a ledit élément de contact (19) et ledit élément de référence (32) solidaires de celle-ci.

**4.** Capteur de tension de fil selon la revendication 3, **caractérisé en ce que** ledit bras souple (20) est fourni en une seule pièce et a une fente longitudinale (21) qui est pourvue d'une partie centrale sensiblement rectiligne (21a) et d'élargissements (21b, 21c) à ses deux extrémités opposées, qui réduisent localement l'épaisseur du matériau dudit bras souple (20) en quatre points faisant élastiquement ressort (20a, 20b, 20c, 20d) aux coins d'un rectangle, de manière à fournir ledit quadrilatère articulé.

**5.** Capteur de tension de fil selon la revendication 4, **caractérisé en ce que** ledit bras souple (20) est constitué d'un alliage d'aluminium et l'épaisseur minimale du matériau auxdits quatre points (20a, 20b, 20c, 20d) est sensiblement égale à 1/10 de l'épaisseur sur ladite partie centrale sensiblement rectiligne (21a).

6. Capteur de tension de fil selon une ou plusieurs des revendications 1 à 5, **caractérisé en ce qu'**il comporte une première bobine en spirale (18a) et une seconde bobine en spirale (18b) qui sont agencées sur des côtés opposés respectifs d'une carte à circuit (16).

7. Capteur de tension de fil selon la revendication 2, **caractérisé en ce que** ledit élément de référence (132) a une seconde surface plane (132b) opposée à la première et dirigée vers une bobine en spirale respective et parallèle à celle-ci, ladite unité de commande étant programmée pour calculer la position dudit élément de référence (132) en fonction du rapport entre les impédances parallèles équivalentes mesurées sur les deux bobines en spirale, en neutralisant ainsi l'influence de la température sur la mesure.

8. Capteur de tension de fil selon une ou plusieurs des revendications 3 à 7, **caractérisé en ce que** ledit bras souple (220) est pourvu d'un amortisseur dynamique (234), qui est constitué d'un film élastique (236) ayant une extrémité solidaire de l'extrémité libre du bras souple (220) et l'extrémité libre opposée ancrée à une masse (238), ledit amortisseur dynamique ayant une fréquence propre proche de la fréquence naturelle dudit bras souple (220) afin de limiter les vibrations de celui-ci.

9. Capteur de tension de fil selon la revendication 2, **caractérisé en ce que** lesdits moyens de support comportent une tige (320) qui peut axialement coulisser par rapport audit support (312) et est pourvue dudit élément de contact (319) à l'une de ses extrémités et ledit élément de référence (332) à son extrémité opposée, ladite tige (320) étant rappelée en s'éloignant de ladite au moins une bobine en spirale par des moyens élastiques (344).

10. Capteur de tension de fil selon la revendication 9, **caractérisé en ce que** lesdits moyens élastiques comportent un ressort de compression (344) qui est intercalé de manière fonctionnelle entre ledit élément de contact (319) et ledit support (312).

11. Capteur de tension de fil selon la revendication 9, **caractérisé en ce que** lesdits moyens élastiques comportent une paire de membranes annulaires coaxiales, élastiques (446a, 446b) qui ont leurs bords intérieurs solidaires de ladite tige (420) et leurs bords extérieurs solidaires dudit support (412).

Fig. 1

Fig. 2

Fig. 3

20a

20c

20b

Fig. 4

20

$F_n$

16a

16b

18a

16

18b

16

Fig. 5

Fig. 6

20d

d

$L_S + L(d)$

I

32

M

18a, 18b

$R_S + R(d)$

C

$V_C$

Fig. 7

*Fig. 8*

*Fig. 9*

*Fig. 10*

Fig. 11

Fig. 12

Fig. 13

Fig. 14

**EP 3 012 608 B1**

## REFERENCES CITED IN THE DESCRIPTION

**Patent documents cited in the description**

- EP 459322 A